# EUROPEAN PATENT SPECIFICATION

(11) **EP 3 077 646 B1**
(45) Date of publication and mention of the grant of the patent: **12.09.2018**
(21) Application number: 14824169.8
(22) Date of filing: 19.11.2014
(51) Int. Cl.: F02D 11/02, F02D 11/04, A01B 67/00, B60K 26/02, G05G 1/04

(54) **HAND THROTTLE WITH LOCATION SETTING**
HANDDROSSEL MIT ORTSEINSTELLUNG
ACCÉLÉRATEUR À MAIN À RÉGLAGE DE LOCALISATION

(30) Priority: 04.12.2013 TR 201314174
(43) Date of publication of application: 12.10.2016
(73) Proprietor: Turk Traktor Ve Ziraat Makineleri Anonim Sirketi, 06560 Ankara (TR)
(72) Inventor: KARS, Hakan, 06560 Ankara (TR); KIRAL, Hakan, 06560 Ankara (TR); SARANLI, Gamze, 06560 Ankara (TR)
(74) Representative: Inal, Aysegul Seda
(86) International application number: PCT/TR2014/000456
(87) International publication number: WO 2015/084280

(56) References cited:
- JP-A- H0 357 731
- JP-A- H11 343 880
- JP-A- 2000 104 566
- US-A- 3 535 951
- US-A- 4 059 025
- US-A1- 2006 130 808

## Description

### Technical Field

This invention is related to a hand throttle with location setting in order to set the hand throttle to be compliant with field and environment conditions during agricultural activities carried out by vehicles used in said activities.

### Prior Art

In internal combustion engines, usually in agricultural vehicles, a hand throttle mechanism which adjusts the speed of the vehicle is present. The user brings up the hand throttle to a certain speed according to field conditions in a field and performs the plowing procedures. During the turning motion, the hand throttle location setting is set to zero and the foot throttle is used; following this the hand throttle is set again for driving. Said setting procedure is performed manually by the driver and this is both time consuming and the exact setting of the speed is difficult. In order to avoid such problems various studies are being carried out in relation to hand throttles.

The speed in mechanical hand throttles within the known state of the art need to be constantly adjusted by the driver. However by means of a hand throttle with location settings which has been described in detail, the hand throttle set to a certain speed is leveled with the speed that has been set by the driver using a latch. Thereby the problems that are faced in relation to loss of time that could occur during speed setting procedures and setting the exact speed are eliminated. JP H03 57731 A, US 4 059 025 A and JP 2000 104566 A disclose mechanical hand throttles.

### Aim and Brief description of the invention

The aim of the present invention is to provide a hand throttle that enables to set the location without the need for hand and other coordination units, after completing the turning procedures of the vehicle. By this means, during plowing a field, following the turning carried out at idle speed at ends of turns, the revolution of the engine is brought to the same speed ranges. This ensures that plowing a field can be carried out at a constant and fixed speed all the time.

Another aim of the invention is to provide a hand throttle mechanism that does not necessitate setting the location manually by means of a latch that has been developed to be installed to the vehicle.

### Definitions of the drawings describing the invention

The drawings and their related explanations in order to better describe the hand throttle with location setting developed according to the present invention have been provided below.
Figure 1: Is the perspective view of the hand throttle, wherein the hand throttle has not been shifted.
Figure 2: Is the exemplary perspective view of the hand throttle with location setting which has been adjusted to a certain gas speed.
Figure 3: Is an exemplary perspective view of the hand throttle with location setting, wherein the locking latch found inside the location setting unit is dropped down.

### Definitions of the elements/ sections/ parts that form the Invention

The parts and sections of the hand throttle with location setting developed according to the present invention, which can be seen in the figures, have each been numbered and the references of each number have been listed below.
15. Hand throttle with location setting
14. Hand throttle unit
13. Location setting unit
1. Bearing
2. Hand throttle wire
3. Hand throttle puller link
4. Puller pin
5. Hand throttle location setting rod
6. Hand throttle locking latch lever
7. Locking pin
8. Locking latch
9. Crank
10. Friction washers
11. Blocking nut
12. Hand throttle knob

### Detailed description of the Invention

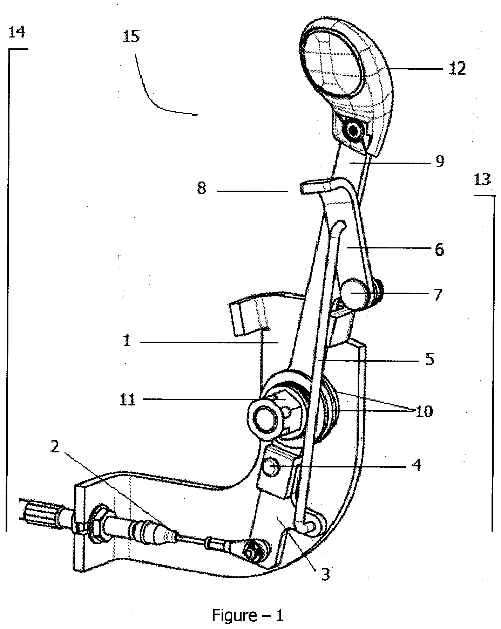

The hand throttle with location setting described according to the present invention comprises a hand throttle (15), a hand throttle unit (14) and a location setting unit (13). In figure 1, the hand throttle (15) with location setting can be seen at a general position, wherein the hand throttle unit (14) has not yet been set.

Said hand throttle unit (14) comprises a hand throttle wire (2) that passes through a cavity that has been provided at the side wall of the bearing (1); a hand throttle puller link (3) that is inserted into the protrusion of the lower leg of the throttle wire (2), a crank (9) that is connected with the pin (4) found inside the hole of the upper leg of said puller link (3) and a hand throttle knob (12) placed at the upper leg of said crank. Said hand throttle puller link (3), is an auxiliary element that comprises three legs, which are T shaped and two of which are perforated and one of which is a protrusion. This puller link (3) is connected to the hole at the bottom end of the crank (9) via the hole at the upper leg, by means of a pin (4) such that it is not in contact with the bearing (1). Said crank (9) is fitted to the protrusion located at the body of the bearing (1) by passing it through a cavity, using friction washers (10) and a blocking nut (12). A hand throttle knob (12) is mounted at one end of said crank (9).

The location setting unit (13) mentioned in the present invention comprises a hand throttle location setting rod (5) and a locking latch (8). One end of the hand throttle location setting rod (5) is inserted through the hole located at the other leg of said hand throttle puller link (3) and is then coupled to the hand throttle unit (14). The locking latch lever (6) is fixed to the protruding section having an end with a cavity located at the body of said crank (9) by its end by means of a hand throttle locking pin (7). Said locking latch (8) acts as semi mobile means as a result of said hand throttle location setting rod (5) being inserted through the hole provided in the locking latch lever (6).

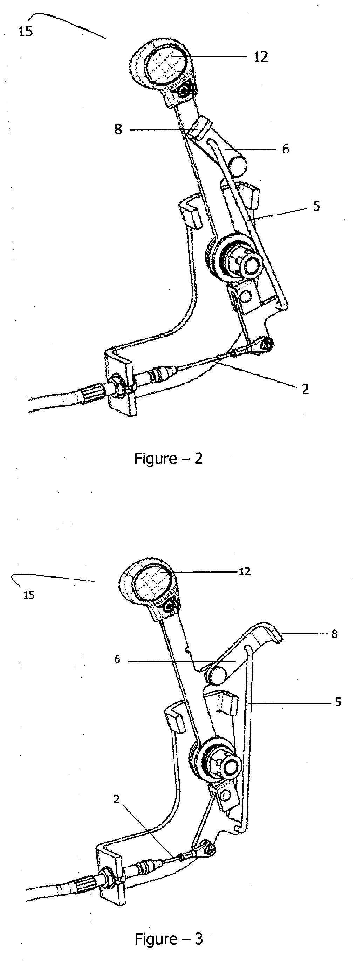

Thereby when the hand throttle crank (9) of the hand throttle (15) with location setting comprising a location setting unit (13) and a hand throttle unit (14), is pushed forward by means of a hand throttle knob (12), the hand throttle is brought to a certain speed. An example wherein the speed of the hand throttle (15) with location setting is set at a certain speed is given in Figure 2.

When the locking latch lever (6) is retracted by means of the motion performed on the locking latch (8), the puller link (3) is pushed forward by means of the hand throttle location setting rod (5). By this means, the hand throttle wire (2) is released, and the speed is idle. In Figure 3, a position where the locking latch (8) located in the location setting unit (13) of the hand throttle (15) with location setting is shown where said latch is dropped down. When the locking latch (8) is dropped the speed is idle.

The hand throttle locking latch lever (6) is pushed forward, by means of the locking latch (8) in order to return the hand throttle (15) with location setting to the present speed from its idle speed. The hand throttle puller link (3) is retracted by means of the hand throttle location setting rod (5) and the hand throttle wire (2) is pulled during this motion thereby the speed is returned to the desired speed.

The speed setting process that was carried out each time manually by the driver in the prior art, is performed such that the speed is brought to the revolution of the engine by means of a locking latch (8) according to the present invention. Additionally, the difficulties faced until the correct speed is adjusted in the prior art is eliminated and the speed desired to be adjusted right after idle speed is provided without any deviation by means of the location setting unit (13) which comprises the locking latch (8).

## Claims

1. A hand throttle with location setting (15) for use in an agricultural vehicle to adjust the speed of the vehicle comprising a hand throttle unit (14) and a location setting unit (13), said hand throttle unit (14) comprising
a hand throttle wire (2) that passes through a hole provided in a side wall of a bearing (1),
a hand throttle puller link (3) which is fitted to the protrusion at the lower leg of said hand throttle wire (2),
a crank (9) which is connected via a pin (4) through a hole located in the upper leg of said hand throttle puller link (3) and a hand throttle knob (12) mounted to the top end of said crank (9),
said location setting unit (13) comprising: a hand throttle location setting rod (5), a locking latch lever (6), and a locking latch (8), wherein
• said hand throttle puller link (3) is an auxiliary element that comprises three legs which are T-shaped and two of which are perforated and one of which is a protrusion,
• said hand throttle puller link (3) is connected to the hole at the bottom end of the crank (9) via the hole at the upper leg, by means of a pin (4),
• one end of said hand throttle location setting rod (5) is inserted through the hole located at the other leg of said throttle puller link (3) and is then coupled to the hand throttle unit (14), the other end of said hand throttle location setting rod (5) is inserted through a hole provided in the locking latch lever (6),
• the locking latch lever (6) is fixed to a protruding section of said crank (9) having an end with a cavity located at the body of said crank (9) by its end by means of a hand throttle locking pin (7),
• said locking latch (8) releases the hand throttle wire (2) by pushing the hand throttle puller link (3) by means of the hand throttle location setting rod (5) when the hand throttle locking latch lever (6) is retracted by means of the motion performed on said locking latch (8) and
• said locking latch (8 retracts the hand throttle wire (2) by pulling back the hand throttle puller link (3) using the hand throttle location setting rod (5) when the hand throttle locking latch lever (6) is retracted by means of the motion performed on said locking latch (8) is pushed forward.

## Patentansprüche

1. Handgas mit einer Standorteinstellung (15) zur Verwendung in einem landwirtschaftlichen Fahrzeug zum Einstellen der Geschwindigkeit des Fahrzeugs, umfassend eine Handgaseinheit (14) und eine Standorteinstellungseinheit (13), wobei die Handgaseinheit (14) folgendes umfasst:
Handgaskabel (2), das durch ein Loch innerhalb einer seitlichen Wand eines Lagers (1) führt,
ein Handgas-Abziehglied (3), das an dem Vorsprung an dem unteren Schenkel des Handgaskabels (2) angebracht ist,
eine Kurbel (9), die über einen Stift (4) durch ein im oberen Schenkel des Handgas-Abziehglieds (3) angeordnetes Lochs verbunden ist und einen Handgasknopf (12), der am oberen Ende der Kurbel (9) montiert ist,
die Standorteinstellungseinheit (13) umfassend: eine Handgas-Standorteinstellungsstange (5), einen Sperrklinkenhebel (6), und eine Sperrklinke (8) wobei
• das Handgas-Abziehglied (3) ein Hilfselement ist, das drei Schenkel aufweist, die T-förmig sind und von denen zwei perforiert sind und von denen einer ein Vorsprung ist,
• das Handgas-Abziehglied (3) mit dem Loch an dem unteren Ende der Kurbel (9) durch das Loch an dem oberen Schenkel mittels des Stifts (4) verbunden ist,
• ein Ende der Handgas-Standorteinstellungsstange (5) durch das Loch am anderen Schenkel von Handgas-Abziehglied (3) eingesetzt ist und dann an die Handgaseinheit (14) gekoppelt ist, das andere Ende der Handgas-Standorteinstellungsstange (5) durch das Loch am Sperrklinkenhebel (6) eingesetzt ist,
• der Sperrklinkenhebel (6), der ein auf dem Körper der Kurbel (9) angeordnete Ende mit einem Hohlraum an einem vorstehenden Abschnitt der Kurbel (9) aufweist, über seinem Ende mittels eines Handgases-Verriegelungsstifts (7) befestigt ist
• die Sperrklinke (8) das Handgaskabel (2) freigibt, in dem das Handgas-Abziehglied (3) mittels einer Handgas-Standorteinstellungsstange (5) gedrückt wird, wenn der Sperrklinkenhebel (6) durch die auf der Sperrklinke (8) durchgeführte Bewegung zurückgezogen ist, und
• die Sperrklinke (8) das Handgaskabel (2) zurückzieht, in dem das Handgas-Abziehglied (3) mittels einer Handgas-Standorteinstellungsstange (5) zurückgezogen wird, wenn der Sperrklinkenhebel (6) durch die auf der Sperrklinke (8) durchgeführte Bewegung gedrückt ist.

## Revendications

1. Accélérateur à main avec réglage d'emplacement (15) à utiliser dans un véhicule agricole pour régler la vitesse du véhicule, comprenant une unité d'accélérateur à main (14) et une unité de réglage de l'emplacement (13), ladite unité d'accélérateur à main (14) comprenant
un fil d'accélérateur à main (2) qui traverse un trou prévu dans une paroi latérale d'un palier (1),
un lien d'extracteur d'accélérateur à main (3) adaptée à la saillie du bras inférieur dudit fil d'accélérateur à main (2),
une manivelle (9) qui est reliée par une broche (4) à travers un trou situé dans la branche supérieure de ledit lien d'extracteur d'accélérateur à main (3) et un bouton d'accélérateur à main (12) monté sur l'extrémité supérieure de ladite manivelle (9), ladite unité de réglage d'emplacement (13) comprenant: une tige de réglage de l'emplacement d'accélérateur à main (5), un levier de verrouillage (6), et un loquet de verrouillage (8) dans lequel
• ledit lien d'extracteur d'accélérateur à main (3) est un élément auxiliaire qui comprend trois pieds qui sont en forme de T et dont deux sont perforés et dont l'un est une protubérance
• ledit lien d'extracteur d'accélérateur à main (3) est relié au trou situé à l'extrémité inférieure de la manivelle (9) par l'intermédiaire du trou de la jambe supérieure, au moyen d'une broche (4),
• une extrémité de ladite tige de réglage de l'emplacement d'accélérateur à main (5) est insérée à travers le trou situé sur l'autre branche de ledit lien d'extracteur d'accélérateur à main (3) et est ensuite couplée à l'unité d'accélérateur à main (14), l'autre extrémité de ladite tige de réglage de l'emplacement d'accélérateur à main (5) est insérée à travers un trou prévu dans le levier de verrouillage (6)
• le levier de verrouillage (6) est fixé à une section en saillie de ladite manivelle (9) présentant une extrémité avec une cavité située au niveau du corps de ladite manivelle (9) par son extrémité au moyen d'une broche de verrouillage d'accélérateur à main (7)
• ledit loquet de verrouillage (8) libère le fil d'accélérateur à main (2) en poussant le lien d'extracteur d'accélérateur à main (3) au moyen de la tige de réglage de l'emplacement d'accélérateur à main (5) lorsque le levier de verrouillage (6) d'accélérateur à main est rétracté du mouvement effectué sur ledit loquet de verrouillage (8) et
• ledit loquet de verrouillage (8) rétracte le fil d'accélérateur à main (2) en tirant sur le lien d'extracteur d'accélérateur à main (3) à l'aide de la tige de réglage de l'emplacement d'accélérateur à main (5) lorsque le levier (6) de verrouillage d'accélérateur est rétracté au moyen de le mouvement effectué sur ledit loquet de verrouillage (8) est poussé vers l'avant.
